# EUROPEAN PATENT APPLICATION

(11) **EP 4 238 803 A1**
(43) Date of publication of application: **06.09.2023**
(21) Application number: 23156953.4
(22) Date of filing: 16.02.2023
(51) Int. Cl.: B60K 35/00, B60K 37/04, B60Q 3/217, B60R 13/02

(54) **OPTICAL SIGNALING SYSTEM FOR VEHICLES**

(30) Priority: 17.02.2022 ES 202230131
(71) Applicant: Seat, S.A., 08760 Martorell (ES)
(72) Inventor: NADAL CAMPOS, Alejandro, 08760 Martorell (ES); ALCOCER REDONDO, Antonio, 08760 Martorell (ES); FERNANDEZ ABAD, Jose Luis, 08760 Martorell (ES); CASTRO VEIGA, Ines, 08760 Martorell (ES); MONTERO RIDAO, Jorge, 08760 Martorell (ES); RODRÍGUEZ BOSCH, Rubén, 08760 Martorell (ES); TRULLÉN MULET, Irene, 08760 Martorell (ES)
(74) Representative: Elzaburu S.L.P.

(57) **Abstract**

The present invention discloses an optical signaling system (1) for a vehicle side door (3). The system (1) comprises the vehicle side door (3), wherein the vehicle side door (3) comprises an outer door paneling (3.3), an inner door panel (3.1), and a side window (4). The side window (4) is coupled to an inner door panel (3.1) and/or an outer door paneling (3.3). The system (1) further comprises a lighting device (2) coupled to the inner door panel (3.1), where the lighting device (2) comprises a plurality of lighting sources (2.2) configured to generate light beams (2.3). The lighting device (2) is configured and arranged to irradiate the generated light beams (2.3) towards the side window (4) such that said light beams (2.3) are reflected by the side window (4) towards the inside of the vehicle passenger compartment.

## Description

The object of the present invention relates to an optical signaling system for a vehicle. The system object of the present invention allows light to be reflected on a side window towards the interior of a vehicle passenger compartment.

In particular, the optical signaling system is intended for reflecting light beams, generated by a lighting source located on an inner panel of a side door, towards the inside of the vehicle passenger compartment. The arrangement of the optical signaling system prevents light beams generated by the lighting source from directly irradiating a user who is inside the vehicle passenger compartment. This arrangement reduces the visual load of said user by generating optical signals towards a specific region inside the vehicle solely by means of reflection. In addition, the optical signaling system of the present invention has the advantage of keeping the direction of the reflected optical signaling constant for a range of positions of the side window.

The optical signaling system object of the present invention is applicable to any vehicle comprising side windows.

### Background of the Invention and Technical Problem to be Solved

Optical signaling systems for a side door of a vehicle comprising the features included in the preamble of claim 1 are known.

For example, this is the case of the system described in patent document WO2020020520, which comprises:
- a vehicle side door, wherein the vehicle side door comprises an outer door paneling, an inner door panel, and a side window, with the side window being coupled to an inner door panel and/or an outer door paneling,
- a lighting device coupled to the inner door panel, where the lighting device comprises a plurality of lighting sources configured to generate light beams.

Said optical signaling system in vehicles uses a concept of light transfer based on the introduction of light beams into the side window. Said side window acts as a light guide to transmit the light beams internally through the inside of the body of the side window. The light beams are generated near the base of both sides of the two faces of the side window. Said generated light beams are reflected and refracted by means of the side window in order to direct them towards an inner face of the side window which comprises diffusion patterns. This configuration allows generating only a lighted up graphic or element in the predefined side window, identical to the configuration of the diffusion patterns. Additionally, the inclusion of diffusion patterns inside the side window causes distortions in the vision of a user through said side window, which can cause safety problems when driving the vehicle, since the user is unable to see clearly through the side window.

According to the state of the art to date, the applicant considers that there is no known invention which allows generating light beams from inside the vehicle configured to be reflected, according to a substantially constant direction for a range of window positions, towards the inside of the vehicle passenger compartment, such that direct radiation from the lighting source on a user who is inside the vehicle passenger compartment is prevented, thereby reducing the user's visual load.

### Description of the Invention

In order to solve the aforementioned drawbacks, the present invention relates to an optical signaling system for a vehicle side door. In that sense, an optical signaling system in vehicles which transmits optical signaling by means of reflection on a side window into the vehicle passenger compartment, such that the direction of the reflected optical signaling is kept constant for a range of window positions, has not been identified in the state of the art. A signaling system that uses the side window is described below.

The optical signaling system for a vehicle side door comprises the vehicle side door, wherein the vehicle side door comprises an outer door paneling, an inner door panel, and a side window. The side window is coupled to an inner door panel and/or an outer door paneling.

Outer door paneling is understood to mean the body, usually made of metallic material, that covers the door on the external area the vehicle, and it is therefore the outermost body of the vehicle side door. Inner door paneling is understood to mean the body, usually made of plastic material, that covers the door on the internal area the vehicle, and it is therefore the innermost body of the vehicle side door. A cavity or hollow space occupied by different components, such as structural elements of the door, which provide rigidity, is generated between both bodies. In addition, the side window is usually movable between a first concealed or open position, occupying a space between the outer paneling and the inner paneling, and a visible or closed position, being arranged above said outer paneling and said inner paneling, according to a direction perpendicular to the running surface of the vehicle.

The optical signaling system further comprises a lighting device coupled to the inner door panel, where the lighting device comprises a plurality of lighting sources configured to generate light beams. The lighting device is configured and arranged to irradiate the generated light beams towards the side window such that said light beams are reflected by the side window towards the inside of the vehicle passenger compartment.

In this way, optical signaling is directed towards the vehicle passenger compartment by means of the reflection of the beams on the side window. Since the lighting device is coupled to the inner door panel, the direction of propagation of the beams towards the inside of the vehicle passenger compartment is not affected by the position of the side window with respect to the inner panel within a range of opening, which makes it possible to maintain a direction of the reflected beams for said range of opening of the side window with respect to the inner paneling. In other words, the direction of propagation of the beams is successfully maintained for different opening positions of the window.

Therefore, according to the arrangement of the optical signaling system, the occupants of the vehicle can receive the light beams reflected from a window adjacent to their respective seat which is part of an optical signaling system and from another window opposite the preceding one which is part of another optical signaling system. In other words, a driver's head can receive the light beams reflected from the window adjacent to the driver seat and from the window opposite said window adjacent to the driver seat, wherein said windows are part of two optical signaling systems according to the present invention. Similarly, the co-driver can receive, depending on the arrangement of the optical signaling system, optical signaling coming from the window adjacent to their respective seat and from the window opposite same when these windows are part of two optical signaling systems. The system is also valid for implementation in rear doors of the vehicle. In addition, depending on the arrangement of the optical signaling system, the occupants can receive optical signaling from a single window adjacent to their respective seat.

According to one aspect of the signaling system, the lighting device comprises an extraction surface, which is configured to allow extraction towards the outside of the lighting system. The extraction surface comprises a plurality of openings configured to allow the exit of the light beams. In addition, the extraction surface is arranged forming an acute angle α with respect to the side window, such that the light beams reflected by the side window can strike a region of the passenger compartment inside the vehicle occupied by the head of an occupant of said vehicle. The extraction surface allows determining the exit direction of the beams and the inclination thereof towards the side window allows directing the beams by means of reflection towards the region of the passenger compartment inside the vehicle occupied by the head of an occupant of the vehicle.

According to a first embodiment, the light beams strike the extraction surface according to a substantially perpendicular direction, such that they are extracted towards the outside in said same direction substantially perpendicular to the extraction surface. According to an alternative embodiment, the extraction surface comprises a light beam-directing body, such that the light beams striking the directing body are directed in a direction substantially perpendicular to the extraction surface. The directing body can be a lens or a reflecting surface.

Preferably, the acute angle α formed between the extraction surface of the lighting device and the side window is preferably between 38° and 48°.

More preferably, the acute angle α formed between the extraction surface of the lighting device and the side window is preferably between 42° and 44°.

Said ranges of the acute angle α depend on the structure of the vehicle, such as, for example, the angle of inclination of the side window with respect to a direction perpendicular to the running surface or the concave geometry of said side window. The ranges of the acute angle α also depend on the arrangement of the lighting device in the inner panel. According to the present invention it has been observed that for various types of vehicles and by coupling the lighting device in the inner panel, light beams are successfully directed towards the region occupied by the head of an occupant of the vehicle using the angular ranges disclosed above.

In one embodiment of the signaling system, the inner door panel comprises a flange and a hole, the hole being positioned between the flange and the side window. Said flange and said hole are arranged in an upper area of the inner panel, that is, on the highest surface of the inner panel, according to a vertical direction transverse to the direction of travel of the vehicle. The lighting device is coupled in said hole of the inner panel. By forming a hole in the inner panel for the lighting device, the assembly thereof is facilitated.

One aspect of the preceding embodiment of the signaling system is that the flange is arranged higher than the extraction surface according to a vertical direction transverse to the direction of travel of the vehicle. In this way, the flange prevents the generated light beams from directly irradiating the region of the passenger compartment inside the vehicle occupied by the head of an occupant of the vehicle. Although the optical signaling system generally emits light beams according to a direction substantially perpendicular to the extraction surface, directing them towards the side window, there may be light beams extracted through the extraction surface that are emitted towards other directions. In order to prevent said light beams from directly striking the occupant of the vehicle, the flange is located in the form of a physical block to prevent the direct transmission of said light beams towards the area inside the passenger compartment.

In another additional embodiment of the signaling system, the extraction surface of the lighting device is arranged above an upper end of the outer door paneling according to a vertical direction transverse to the direction of travel of the vehicle. In this way, the light beams generated by the lighting device are configured to be emitted towards the outside of the vehicle side door and said light beams can be visible from the outside of the vehicle side door. This arrangement allows the entire extraction surface to be visible above the upper end of the outer door paneling according to a vertical direction transverse to the direction of travel of the vehicle, and therefore people outside the vehicle passenger compartment can receive the optical signaling.

In another additional embodiment of the signaling system alternative to the embodiment described above, the extraction surface of the lighting device is arranged below the upper end of the outer door paneling according to a vertical direction transverse to the direction of travel of the vehicle, such that at least part of the light beams generated by the lighting device are configured to be emitted towards the outside of the vehicle side door. By means of the arrangement of the lighting device with respect to the door, light beams are emitted in an inclined manner with respect to the side window. By means of said configuration, the light beams emitted towards the outside of the vehicle can only be seen by people who are near the vehicle, preventing the light beams from being seen, for example, by users who are far from the vehicle.

In either of the two embodiments described above, the system object of the present invention allows light to be reflected on a side window towards the inside of a vehicle passenger compartment and allows light to be refracted through the side window towards the outside of the vehicle passenger compartment.

By means of the optical signaling system, a region of the passenger compartment inside the vehicle occupied by the head of an occupant can receive reflected optical signaling related to the state of the vehicle, driving parameters, and/or ambient light, among others. In addition, due to the arrangement of the optical signaling system, the region of the passenger compartment inside the vehicle occupied by the head of an occupant does not receive direct light from light sources that generate the light beams, which reduces the visual load of the occupant of said vehicle. Finally, said optical signaling emitted by the same lighting device can be emitted to the outside, and can therefore be visible to users outside the vehicle, being able to transmit information from the vehicle towards the outside of the vehicle.

In another additional embodiment of the signaling system, the extraction surface of the lighting device is arranged along the upper surface of the inner door panel, from a front end of the vehicle side door to a rear end of the vehicle side door according to a direction of travel of the vehicle. In this way, the surface available for the lighting device is increased without extending into the vehicle, which optimizes the available space and increases the number of optical signaling that can be transmitted.

In another additional embodiment of the signaling system, the acute angle α formed between the extraction surface and the side window is variable between the front end of the lighting device and the rear end of said lighting device in the direction of travel of the vehicle. In this way, the light beams emitted from the extraction surface and reflected on the side window can strike the region of the passenger compartment inside the vehicle occupied by the head of an occupant of said vehicle.

In another additional embodiment of the signaling system, the lighting device comprises a lattice structure arranged between the extraction surface and the plurality of lighting sources. Said lattice structure is configured to polarize the light beams generated by the plurality of lighting sources. This thereby ensures that the light beams are emitted parallel to one another and according to the desired direction, directing them in the specific area of the side window such that they can be perceived by the occupant of the vehicle when reflected by the side window.

In another additional embodiment of the signaling system, the lattice structure comprises a first surface of the lattice structure and a second surface of the lattice structure. The lattice structure is configured to form a plurality of cells, wherein where each of the plurality of lighting sources is configured to emit light beams through at least one cell of the plurality of cells. In this way, each lighting source is configured to take advantage of the maximum number of cells provided, thereby reducing the number of these lighting sources that is required. In addition, the lattice has the function of polarizing the light coming from said sources, which allows uniform directing. Thus, each lighting source is associated with at least one respective cell, emitting light only through said associated cells. With an on and/or off and/or color configuration, sequences, progressions, and different messages are successfully generated through one and the same lighting device.

In another additional embodiment of the signaling system, the lattice structure comprises opaque inner walls perpendicular to the extraction surface of the light beams. In this way, the opaque inner walls of the lattice structure form the plurality of cells, preventing the light beams generated by one light emitter from mixing with the light beams generated by other light emitters, before said light beams pass through the extraction surface, improving the precision and visual definition of the light beams extracted through the lighting device.

### Description of the Figures

Figure 1 shows a schematic cross-section of the arrangement of the lighting device with respect to the side window.
Figure 2 shows a cross-section of an embodiment of the optical signaling system, indicating the acute angle α formed between the lighting device coupled in the inner panel with respect to the side window, and also shows the outer paneling.
Figure 3 shows the cross-section of Figure 2 in an embodiment of the optical signaling system, indicating the lighting sources and the extraction surface of the lighting device.
Figure 4 shows a schematic exploded perspective view of the lighting device and a cross-section of the lattice structure according to one embodiment.
Figure 5 shows an exploded perspective view of the lighting device according to one embodiment.
Figure 6 shows an exploded cross-section of the lighting device according to one embodiment.

### Detailed Description

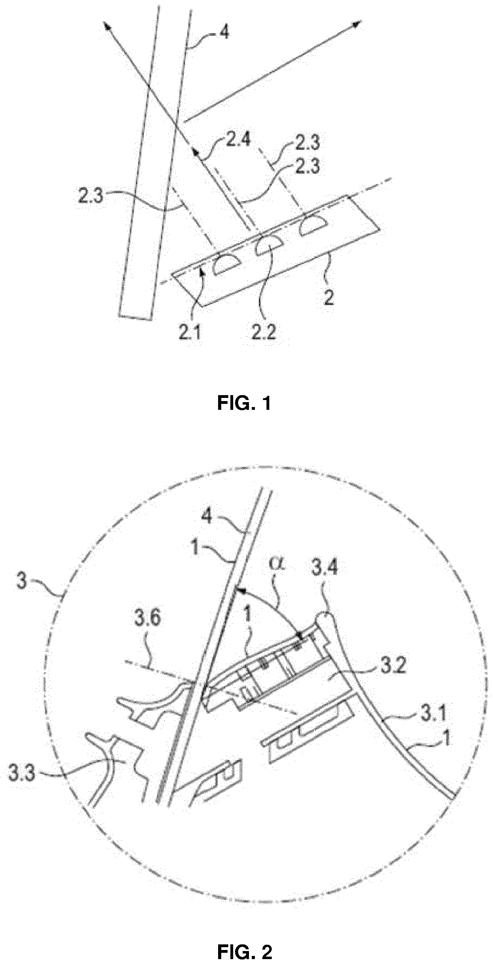

Figure 1 shows a schematic cross-section of an embodiment of the arrangement of a lighting device (2) with respect to a side window (4). The lighting device (2) comprises an extraction surface (2.1) that forms an acute angle α with the surface of the side window (4) (see Figure 2). The lighting device (2) comprises lighting sources (2.2) configured to generate beams (2.3), according to said preferred embodiment, in a direction substantially perpendicular to the extraction surface (2.1). Said light beams (2.3) are configured to be reflected on said surface of the side window (4) towards the inside of the vehicle passenger compartment and are also configured to pass through the side window (4) towards the outside of the vehicle, as shown in the sequence of arrows depicted in Figure 1. In this embodiment of the arrangement between the lighting device (2) and the side window (4), the reflected light beams (2.3) are configured to form 90° with respect to a direction (2.4) of the light beams (2.3) that propagate from the extraction surface (2.1) to the surface of the side window (4).

Therefore, the light beams (2.3) emitted by a single lighting device (2) can be observed by an occupant inside the vehicle, due to the reflection of said light beams (2.3) on the surface of the side window (4) and, at the same time, observed by a person outside the vehicle, due to the refraction of said light beams (2.3) through the side window (4). The relative inclination between the direction of the extracted light beams (2.3) and the surface of the side window (4) will determine the respective areas inside and outside the vehicle from where the light beams (2.3) can be seen.

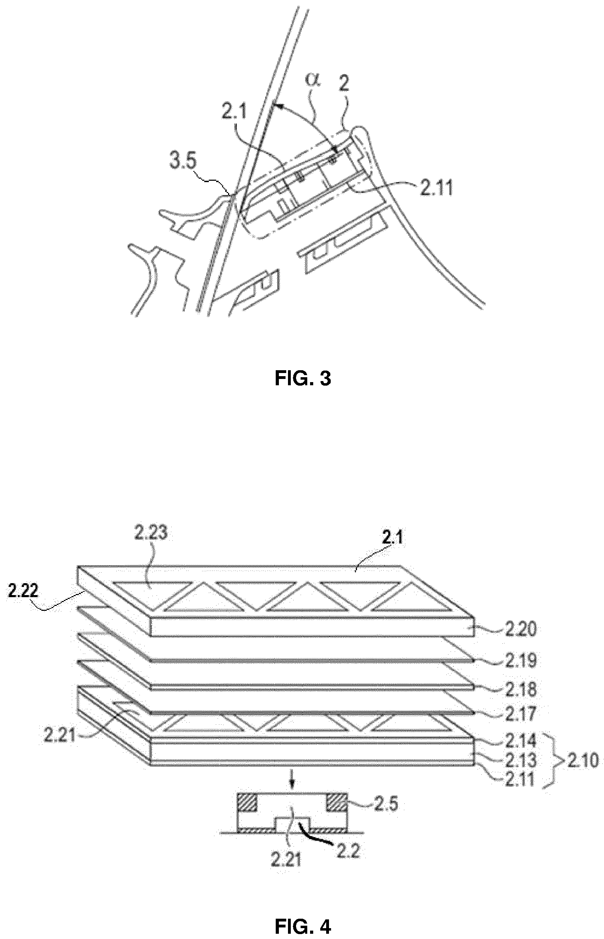

Figure 2 and Figure 3 show a cross-section of an embodiment of the signaling system. Said signaling system comprises a vehicle side door (3), the side window (4), and the lighting device (2). The vehicle side door (3) comprises an outer door paneling (3.3) and an inner door panel (3.1). Said side window (4) is configured to be coupled to the inner door panel (3.1) and/or to the outer door paneling (3.3). In this embodiment, the inner panel (3.1) comprises a flange (3.4) configured to form the highest part of the inner panel (3.1) according to a vertical direction transverse to the direction of travel of the vehicle. The inner panel is configured to have a hole (3.2) between the flange (3.4) and the side window (4), with the lighting device (2) being configured to be coupled in said hole (3.2). The coupling between the lighting device (2) and the hole (3.2) is configured to form the acute angle α between the extraction surface (2.1) and the side window (4). Said flange (3.4) is located between the lighting device (2) and the occupant inside the vehicle, such that the flange (3.4) blocks said user from looking directly at the lighting device (2). The visual quality of the vehicle side door (3), as well as the clarity and precision of the visual signaling generated by the lighting device (2), are thus improved since the user does not see the extraction surface (2.1), but can only see the light beams once they have been reflected on the surface of the side window (4). Therefore, the formation of said acute angle α in combination with the flange (3.4) are configured to prevent the occupant from being able to look directly at the extraction surface (2.1).

The extraction surface (2.1) further comprises a plurality of openings (2.23) configured to allow the exit of the light beams (2.3). In addition, the acute angle α is configured to irradiate the light beams (2.3) on the side window (4), such that the light beams (2.3) reflected on the side window (4) are directed to a region inside the vehicle passenger compartment comprising a driver's and/or passenger's head.

Preferably, the signaling system is configured to form an acute angle α between the extraction surface (2.1) of the lighting device (2) and the side window (4) of 38° to 48°.

More preferably, the signaling system is configured to form an acute angle α between the extraction surface (2.1) of the lighting device (2) and the side window (4) of 42° to 44°.

For these intervals of the acute angle α, the present application has verified that the light beams (2.3) are successfully reflected towards an occupant's head for various structures of vehicle side door (3) and inner panel (3.1), which are the variable parameters of each vehicle.

In an additional embodiment of the optical signaling system (1), as seen in Figures 2 and 3, the extraction surface (2.1) of the lighting device (2) is arranged above an upper end (3.5) of the outer door paneling (3.3), according to a vertical direction transverse to the direction of travel of the vehicle. In other words, the extraction surface (2.1) is arranged above a plane (3.6) tangent to the upper end (3.5) of the outer paneling and perpendicular to the adjacent window (see Figure 2) according to a vertical direction transverse to the direction of travel of the vehicle. In this configuration of the optical signaling system (1), the light beams (2.3) generated by the lighting device (2) are configured to be emitted towards the outside of the vehicle side door (3) and said light beams (2.3) can be visible from the outside of the vehicle side door (3). In particular, in this embodiment, the extraction surface (2.1) is configured to be visible from the side of the side window (4) adjacent to the outer door paneling (3.3), at least above the upper end (3.5) of the outer door paneling (3.3). Therefore, the double functionality of emitting optical signaling which can be received by possible external users and by the occupant is achieved by means of a single lighting device (2).

In another additional embodiment of the optical signaling system (1), not shown in the figures, the extraction surface (2.1) of the lighting device (2) is arranged below the upper end (3.5) of the outer door paneling (3.3), according to a vertical direction transverse to the direction of travel of the vehicle. In other words, the extraction surface (2.1) is arranged below a plane (3.6) tangent to the upper end (3.5) of the outer paneling and perpendicular to the adjacent window (see Figure 2) according to a vertical direction transverse to the direction of travel of the vehicle. In this way, at least part of the light beams (2.3) generated by the lighting device (2) are configured to be emitted towards the outside of the vehicle side door (3). Like the preceding embodiment, in this embodiment of the signaling system the light beams (2.3) generated by the lighting device (2) are configured to be emitted towards the outside of the vehicle side door (3) and said light beams (2.3) can be visible from the outside of the vehicle side door (3). In particular, in this embodiment, the extraction surface (2.1) is configured to be substantially covered from the side of the side window (4) adjacent to the outer door paneling (3.3) by the same outer door paneling (3.3). The outer paneling (3.3) at least partially blocks the extraction of light beams towards the outside of the vehicle, limiting the angle of visibility of the lighting device (2) from outside the vehicle. In this way, the double functionality of emitting optical signaling which can be received by possible external users and by the occupant is achieved by means of a single lighting device (2) substantially without possible external users and the occupant seeing the extraction surface (2.1).

In another additional embodiment of the optical signaling system (1), the extraction surface (2.1) of the lighting device (2) is arranged along the upper surface of the inner door panel (3.1), from a front end of the vehicle side door (3) to a rear end of the vehicle side door (3) according to a direction of travel of the vehicle. According to Figures 2 and 3, this extension is configured to be carried out in the direction of travel of the vehicle. This extension configuration of the extraction surface (2.1) makes it possible to take advantage of the shape of the inner panel (3.1) to increase the extraction surface (2.1) without having to reduce the space inside the vehicle passenger compartment. Additionally, this extension configuration of the extraction surface (2.1) allows generating optical signaling towards the passenger compartment inside the vehicle and/or towards the outside of the vehicle for a wide range of opening positions of the side window (4).

In another additional embodiment of the optical signaling system (1), the acute angle α formed between the extraction surface (2.1) and the side window (4) is variable between the front end of the lighting device (2) and the rear end of said lighting device (2) in the direction of travel of the vehicle. In this way, the light beams (2.3) emitted along the front end of the lighting device (2) and the rear end of said lighting device (2) can be directed to the region of the passenger compartment inside the vehicle which is occupied by the head of an occupant of said vehicle.

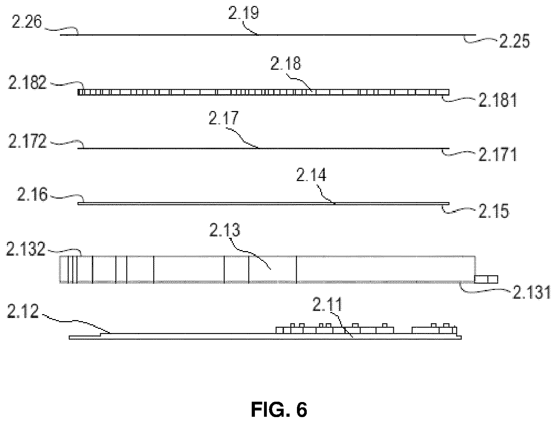

In another additional embodiment of the optical signaling system (1), the lighting device (2) comprises a lattice structure (2.13), see Figures 4, 5, and 6. Said lattice structure (2.13) is arranged between the extraction surface (2.1) and the plurality of lighting sources (2.2), where the lattice structure (2.13) is configured to polarize the light beams (2.3) generated by the plurality of lighting sources (2.2).

According to a particular embodiment of the optical signaling system (1), the lattice structure (2.13) comprises a first surface (2.131) of the lattice structure (2.13) and a second surface (2.132) of the lattice structure (2.13). The lattice structure (2.13) is configured to form a plurality of cells (2.7), where each of the plurality of lighting sources (2.2) is configured to emit light beams (2.3) through at least one cell (2.7) of the plurality of cells (2.7). In this way, the number of lighting sources (2.2) needed to generate light beams (2.3) polarized through the cells (2.7) is successfully minimized. In addition, each of the lighting sources (2.2) is associated with at least one respective cell (2.7), such that turning a lighting source on/off causes only the cell (2.7) associated with said lighting source (2.2) to be lighted up selectively. In this way, it is possible to create on and off sequences with dynamism effects, progressive on/off, among other possible optical outputs.

In another additional embodiment of the optical signaling system (1), the lighting sources (2.2) are LEDs.

In another additional embodiment of the optical signaling system (1), the lattice structure (2.13) comprises opaque inner walls (2.5) perpendicular to the extraction surface (2.1) of the light beams (2.3), such that the opaque inner walls (2.5) of the lattice structure (2.13) form the plurality of cells (2.7).

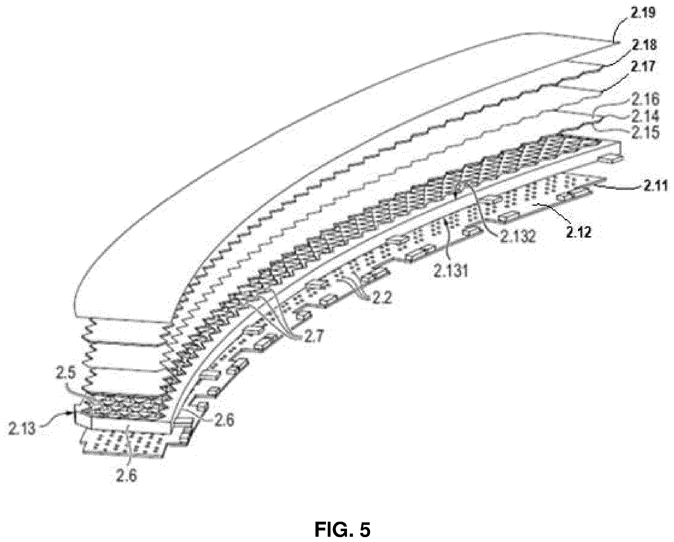

In a possible embodiment of the lighting device (2) as shown in Figures 4, 5, and 6, said lighting device (2) comprises a light box (2.10) comprising a plurality of lighting sources (2.2) attached to a surface (2.12) comprised by a base (2.11) or a printed circuit board. The light box (2.10) further comprises the lattice structure (2.13) comprising said first surface (2.131) of the lattice structure (2.13) and said second surface (2.132) of the lattice structure (2.13), the first surface (2.131) of the lattice structure (2.13) is attached to the base surface (2.12). The lattice structure (2.13) comprises opaque inner walls (2.5) perpendicular to the base (2.11) and opaque side walls (2.6) perpendicular to the base (2.11), such that the opaque inner walls (2.5) and the opaque side walls (2.6) form a plurality of cells (2.7), wherein the lighting sources (2.2) are in light communication with at least one cell (2.7). The light box (2.10) further comprises a cover (2.14) comprising a plurality of openings (2.21), each opening (2.21) being configured to allow the passage of light extracted through the at least one cell (2.7), see Figure 4, and a first surface (2.15) of the cover and a second surface (2.16) of the cover, see Figure 5, with the first surface (2.15) of the cover being attached to the second surface (2.132) of the lattice structure (2.13) so as to close the light box (2.10).

The lighting device (2) further comprises a white vinyl sheet (2.17) comprising a first surface (2.171) of the white vinyl sheet (2.17) and a second surface (2.172) of the white vinyl sheet (2.17). The first surface (2.171) of the white vinyl sheet (2.17) is attached to the second surface (2.16) of the cover (2.14), wherein the white vinyl sheet (2.17) is configured to diffuse the light beams (2.3), homogenizing the intensity of the light emitted throughout the entire extraction surface (2.1).

The lighting device (2) further comprises a methacrylate sheet (2.18) comprising a first surface (2.181) of the methacrylate sheet (2.18) and a second surface (2.182) of the methacrylate sheet (2.18). The first surface (2.181) of the methacrylate sheet (2.18) is attached to the second surface (2.172) of the white vinyl sheet (2.17), wherein the methacrylate sheet (2.18) is configured to form a rigid protective layer for protecting the lighting device (2).

The lighting device (2) also comprises a black vinyl sheet (2.19) comprising a first surface (2.25) of the black vinyl sheet (2.19) and a second surface (2.26) of the black vinyl sheet (2.19). The first surface (2.25) of the black vinyl sheet (2.19) is attached to the second surface (2.182) of the methacrylate sheet (2.18), wherein the black vinyl sheet (2.19) is configured to prevent an observer who is outside the lighting device (2) from seeing the elements comprised between said black vinyl sheet (2.19) and the base (2.11), such that the visual quality of the lighting device (2) is improved, especially when the light sources (2) are turned off.

The lighting device (2) also comprises an ABS covering (2.20), see Figure 4, comprising a plurality of openings (2.23) and a first surface (2.22) of the ABS covering. The first surface (2.22) of the ABS covering is attached to a second surface (2.26) of the black vinyl sheet (2.19) and wherein the ABS covering (2.20) is configured to form the extraction surface (2.1), performing the function of protecting the internal components of the lighting device (2) against impacts and dirt.

## Claims

1. An optical signaling system (1) for a vehicle side door (3) comprising:
- the vehicle side door (3), wherein the vehicle side door (3) comprises an outer door paneling (3.3), an inner door panel (3.1), and a side window (4), with the side window (4) being coupled to the inner door panel (3.1) and/or to the outer door paneling (3.3),
- a lighting device (2) coupled to the inner door panel (3.1), where the lighting device (2) comprises a plurality of lighting sources (2.2) configured to generate light beams (2.3),
**characterized in that** the lighting device (2) is configured and arranged to irradiate the generated light beams (2.3) towards the side window (4) such that said light beams (2.3) are reflected by the side window (4) towards the inside of the vehicle passenger compartment.

2. The optical signaling system (1) according to claim 1, wherein the lighting device (2) comprises an extraction surface (2.1), the extraction surface (2.1) comprises a plurality of openings (2.23) configured to allow the exit of the light beams (2.3), said extraction surface (2.1) is arranged forming an acute angle α with respect to the side window (4) such that the light beams (2.3) reflected by the side window (4) can strike a region of the passenger compartment inside the vehicle occupied by the head of an occupant of said vehicle.

3. The optical signaling system (1) according to claim 2, wherein the acute angle α formed between the extraction surface (2.1) of the lighting device (2) and the side window (4) is preferably between 38° and 48°.

4. The optical signaling system (1) according to claim 3, wherein the acute angle α formed between the extraction surface (2.1) of the lighting device (2) and the side window (4) is preferably between 42° and 44°.

5. The optical signaling system (1) according to any of the preceding claims, wherein the inner door panel (3.1) comprises a flange (3.4) and a hole (3.2), the hole (3.2) being positioned between the flange (3.4) and the side window (4), wherein the lighting device (2) is coupled in the hole (3.2) of the inner panel (3.1).

6. The optical signaling system (1) according to claim 5, wherein the flange (3.4) is arranged higher than the extraction surface (2.1) according to a vertical direction transverse to the direction of travel of the vehicle, such that the flange (3.4) prevents the generated light beams (2.3) from directly irradiating the region of the passenger compartment inside the vehicle occupied by the head of an occupant of said vehicle.

7. The optical signaling system (1) according to any of claims 2 to 6, wherein the extraction surface (2.1) of the lighting device (2) is arranged above an upper end (3.5) of the outer door paneling (3.3), according to a vertical direction transverse to the direction of travel of the vehicle, such that the light beams (2.3) generated by the lighting device (2) are configured to be emitted towards the outside of the vehicle side door (3) and said light beams (2.3) can be visible from the outside of the vehicle side door (3).

8. The optical signaling system (1) according to any of claims 2 to 6, wherein the extraction surface (2.1) of the lighting device (2) is arranged below the upper end (3.5) of the outer door paneling (3.3) according to a vertical direction transverse to the direction of travel of the vehicle, such that at least part of the light beams (2.3) generated by the lighting device (2) are configured to be emitted towards the outside of the vehicle side door (3).

9. The optical signaling system (1) according to any of the preceding claims, wherein the extraction surface (2.1) of the lighting device (2) is arranged along the upper surface of the inner door panel (3.1), from a front end of the vehicle side door (3) to a rear end of the vehicle side door (3) according to a direction of travel of the vehicle.

10. The optical signaling system (1) according to claim 9 when it depends on any of claims 2 to 4, wherein the acute angle α formed between the extraction surface (2.1) and the side window (4) is variable between the front end of the lighting device (2) and the rear end of said lighting device (2) in the direction of travel of the vehicle, such that the light beams (2.3) emitted from the extraction surface (2.1) and reflected on the side window (4) can strike the region of the passenger compartment inside the vehicle occupied by the head of an occupant of said vehicle.

11. The optical signaling system (1) according to any of claims 2 to 10, wherein the lighting device (2) comprises a lattice structure (2.13) arranged between the extraction surface (2.1) and the plurality of lighting sources (2.2), where the lattice structure (2.13) is configured to polarize the light beams (2.3) generated by the plurality of lighting sources (2.2).

12. The optical signaling system (1) according to claim 11, wherein the lattice structure (2.13) comprises a first surface (2.131) of the lattice structure (2.13) and a second surface (2.132) of the lattice structure (2.13), the lattice structure (2.13) being configured to form a plurality of cells (2.7), wherein each of the plurality of lighting sources (2.2) is configured to emit light beams (2.3) through at least one cell (2.7) of the plurality of cells (2.7).

13. The optical signaling system (1) according to claim 12, wherein the lattice structure (2.13) comprises opaque inner walls (2.5) perpendicular to the extraction surface (2.1) of the light beams (2.3), such that the opaque inner walls (2.5) of the lattice structure (2.13) form the plurality of cells (2.7).
